Europäisches Patentamt

European Patent Office

Office européen des brevets

(19)

(11) **EP 1 521 241 A1**

(12) **EUROPEAN PATENT APPLICATION**

(43) Date of publication:
**06.04.2005 Bulletin 2005/14**

(51) Int Cl.7: **G10L 19/04**, G10L 21/02,
H04B 3/20, H04M 9/08

(21) Application number: **03022252.5**

(22) Date of filing: **01.10.2003**

| | |
|---|---|
| (84) Designated Contracting States:<br>**AT BE BG CH CY CZ DE DK EE ES FI FR GB GR**<br>**HU IE IT LI LU MC NL PT RO SE SI SK TR**<br>Designated Extension States:<br>**AL LT LV MK**<br><br>(71) Applicant: **SIEMENS AKTIENGESELLSCHAFT**<br>**80333 München (DE)** | (72) Inventors:<br>• **Beaugeant, Christophe, Dr.**<br>  **81737 München (DE)**<br>• **Dütsch, Nicolas**<br>  **80809 München (DE)**<br>• **Heiss, Herbert, Dr.**<br>  **82008 Unterhaching (DE)**<br>• **Taddei, Hervé, Dr.**<br>  **81543 München (DE)** |

(54) **Transmission of speech coding parameters with echo cancellation**

(57)     The invention refers to a transmission method in an analysis by synthesis system.

The invention refers to a method for transmitting speech parameters representing an acoustic signal being encoded by an analysis through synthesis method wherein at least a part of the speech parameters are selected from fixed codebook entries and respective fixed gains for describing the acoustic signal in a time interval, comprising the steps:

- Estimating the energy ($E_1(k)$) of a received signal ($x(n)$) by using the fixed gain ($g_{l,f}(k)$) of the received signal ($x(n)$);

- Estimating the energy of a signal to be sent ($y(n)$) by using the fixed gain ($g_{m,f}(k)$) of the signal to be sent;

- Deriving a loudspeaker modification factor ($a_1(k)$) for modifying the fixed gain factor ($g_{l,f}(k)$) of the received signal, said loudspeaker modification factor being based on the energy of the received signal ($x(n)$) and the energy of the signal to be sent ($y(n)$);

- Modifying the fixed gain ($g_{l,f}(k)$) of the received signal with the loudspeaker modification factor.

FIG 6

EP 1 521 241 A1

**Description**

The invention refers to a transmission method in an analysis by synthesis system.

Speech signals are often encoded using linear prediction. This is e.g. realized by using CELP (Code Excited Linear Prediction) encoders, where a synthetically produced speech signal is approximated in respect with the original speech signal. The synthetic signal is described by so called codebooks, which contain a variety of excitation signals and respective gains for amplifying or attenuating the excitation signals.

The excitation signals are fed into a filter modelling the vowel tract of a human and the result of the filtering is compared with the original speech signal. The excitation signals and gains are chosen such that the synthetic signal approximates the original signal.

As codebooks mostly a so-called adaptive codebook for describing periodic components of speech and a fixed codebook are being used.

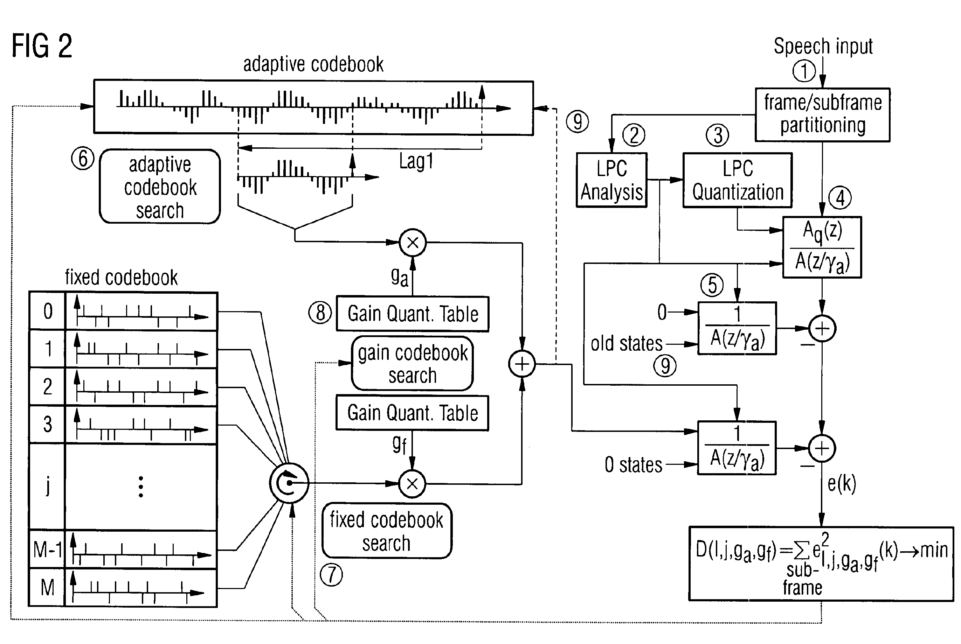

This will be described in greater detail in reference with Fig. 2 using an example from the AMR (Adaptive Multi Rate Codec, which can be used for GSM (Global System of Telecommunications) applications and which is mandatory for UMTS (Universal Mobile Telecommunications System).

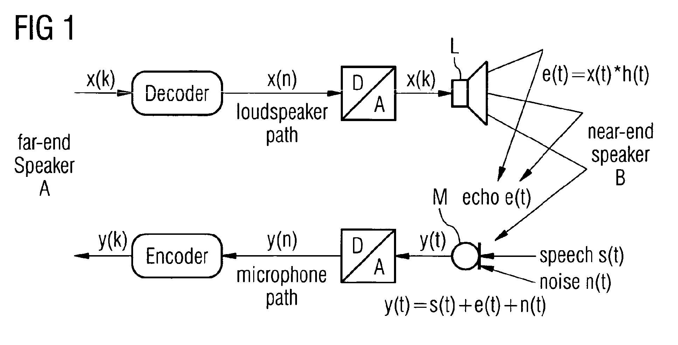

First a model of a communication system derived from a end-to-end conversation of at least two communication devices will be described with reference to Fig. 1. The signal or the voice of one speaker, the near-end-speaker B, is recorded by a microphone M and digitized for encoding the signal in a encoder as a preparation for a transmission. The encoding may comprise e.g. source and channel coding.

This coded signal is transmitted over a noisy channel, i.e. that the signal experiences degradation by the noise, to the counterpart of the conversation, where it is decoded in a decoder, and converted into an analog signal that can be spread over a loudspeaker L. The system can be considered as symmetric, thus only one side needs to be regarded.

The other part of the conversation, the far-end speaker A, is linked with speaker B through the so-called loudspeaker path, whereas the near-end speaker B is linked with the far-end speaker A through the microphone path.

Since speech signals are analog signals, they have to be sampled and converted back for coding reasons. In the framework of this application the index "t", which denotes a time instant explicitely, refers to analog signals whereas digital signals are noted by index "n" or "k", which denote a certain time interval, e.g. a frame or a subframe. "k" references source coded signals, while the digital uncompressed representation of speech is indexed with "n".

The voice of the far-end speaker A is transmitted to the loudspeaker at speaker B and converted to sound waves, so that the near-end speaker is able to understand the other talker. In the same way, the voice of the near-end speaker is converted to a digital signal by the microphone and the A/D-transducer. Besides the near-end speaker's voice, environmental noise and reflected sound waves of the loudspeaker output are recorded by the microphone. Therefore the microphone signal y(t) is a sum of the near-end speech s(t), of the noise n(t) and of the reflected signal or (acoustic) echo signal e(t).

$$y(t) = s(t)+e(t)+n(t) \qquad (1)$$

This is describing the so-called double-talk situation in contrast to the single-talk situation. In the following the noise n(t) is assumed to be 0.

The single-talk mode is characterized by only one person talking. If speaker B is talking, the microphone signal is

$$y(t) = s(t)_{e(t)\,=\,0} \qquad (2)$$

$$y(t) = e(t)_{s(t)\,=\,0} \qquad (3)$$

if only the far-end speaker is talking.

In double-talk both persons are talking simultaneously, so the microphone signal is the sum of the near-end speaker's voice and the echo of the far-end speaker's voice

The main problem of acoustic echo e(t) is that the speaker's own voice is transmitted back to him. This does not affect the quality of the conversation as long as twice the transmission time (transmission over loudspeaker and microphone path) is less or equal the reflection time of the speaker's own voice in his LRM system. Then the echo is masked. Unfortunately in mobile telephony or satellite telephony the transmission time is usually much longer. The result is that the far-end speaker A hears his own voice with a delay of about 160 ms in case of fixed to mobile network transmission. This decreases greatly the quality of the conversation, especially when the partner of the conversation is not talking.

In order to reduce the echo in the microphone signal y(t) a so called "gain-loss control" has been introduced, where the microphone signal y(t) is attenuated for speaker A if the near-end speaker B is talking. Thus less noise or echo will be transmitted from A to B while B is speaking.

In other words, the principle of this method is to attenuate the microphone signal if the far-end speaker is talking and to reduce the loudspeaker signal in power if the near-end speaker is talking. The effect is that only a strongly reduced echo signal is transmitted to the far-end speaker as either the loudspeaker or the microphone path is attenuated. The disadvantage of the gain loss control however is its behavior in double-talk mode. Because in this mode the loudspeaker and the microphone signal do not differ much in their energy, the gain loss control attenuates both paths. Thus conversation is only possible during single-talk mode without decreasing the understandability of the conversation.

The sound waves, which are excited by the diaphragm of the loudspeaker, spread in the LRM system with sonic speed. As they are reflected by objects and walls in this LRM system, there is a superposition of waves at the microphone. These sound waves are delayed and attenuated variably because of different propagation paths. So the echo signal e(t) is a sum of decreased and delayed signals x(t). This is modeled by the convolution of the loudspeaker signal $x(t)$ with the impulse response of the LRM system h(tau,t)

$$e(t) = x(t) * h(\tau,t) \tag{4}$$

where h $(\tau,t)$ is the channel response at observation time t to an impulse at t-tau. The impulse response is time-varying, depending on the motion of people, objects, loudspeaker or microphone in the LRM system.

The proper attenuation of the microphone signal or the loudspeaker signal depending on the energy of the echo signal is, however, complex to calculate.

Based on the foregoing description it is therefore an object of the invention to provide the possibility of implementing a gain loss control that works safely and does not require a high complexity.

This object is solved by the subject matter disclosed in the independent claims. Advantageous embodiments of the present invention will be presented in the dependent claims.

In a method for transmitting speech data or parameter said speech data are encoded by using an analysis through synthesis method. For the analysis through synthesis a synthesised signal is produced for approximating the original signal. The production of the synthesised signal is performed by using at least a fixed codebook with a respective fixed gain and optionally an adaptive codebook and a adaptive gain. The entries of the codebook and the gain are chosen such, that the synthesised signal resembles the original signal.

Parameters describing these quantities will be transmitted from a sender to a receiver, e.g. from a near-end speaker to a far-end speaker or vice versa. These parameters are part of the speech data.

The invention is based on the idea of introducing a gain loss control implemented in the parameter range. Therefor the energy of a received signal, which may be reproduced by a loudspeaker is estimated on basis of its fixed gain. As parameters used for the analsysis through synthesis method are transmitted from the far-end speaker, the fixed gain is available for the near-end speaker.

Furthermore the energy of a signal to be sent, of e.g. the near-end speaker, which may be recorded by using a microphone, is also estimated on basis of its fixed gain. As this signal needs to be encoded before transmission to the far-end speaker, also this fixed gain is available for the near-end speaker.

From the fixed gain of the received signal and the fixed gain of the signal to be sent, which both represent the energies of the respective signals, modification factors are derived, one for the fixed gain of the signal to be sent and one for the fixed gain of the received signal .

Especially, depending on the respective energies of the signal to be sent and the received signal a further "shifting" of the energies to one of the signals can be performed, thus achieving a clear situation that one signal is predominant which enables a better understanding of the speech associated with the predominant signal. The weaker signal, which most probably resembles echo can be attenuated.

The advantage of this gain loss control method is, that the respective shifting is far less complex to calculate in respect with a gain loss control method in a time domain.

In a preferred embodiment the energies of the received signal and/or the signal to be sent are averaged before the modification factors are derived. The advantage thereof is to take account of short time variations that may distort the actual speaking situation, e.g. that a very loud, short noise, which superimposes the echo, fakes the situation that not the actual speaker but the other part of the communication is active.

It is advantageous if the sum of both modification factors is equal to unity in order to not distort the total energy of the speech.

An encoding apparatus set up for performing the above described encoding method includes at least a processing unit. The encoding apparatus may be part of a communications device, e.g. a cellular phone or it may be also situated in a communication network.

In the following the invention will be described by means of preferred embodiments with reference to the accompanying drawings in which:

Fig. 1:   depicts a schematic model of a communication between a far-end and a near-end speaker;

Fig. 2:   shows schematically the function of the AMR encoder;

Fig. 3:   shows schematically the function of the AMR decoder;

Fig. 4:   depicts a characteristic of the modification factors versus the energy difference between the signal to be sent and the received signal.

Fig. 5:   shows the non-linearity of a codec by example of the AMR codec

Fig. 6:   depicts a schematic model of a communication between a far-end and a near end speaker with the various gains;

## Function of a encoder (Fig.2)

First the function of a speech codec is described by an special implementation of an CELP based codec, the AMR (Adaptive Multirate Codec) codec. The codec consists of a multi-rate, that is, the AMR codec can switch between the following bit rates: 12.2, 10.2, 7.95, 7.40, 6.70, 5.90, 5.15 and 4.75 kbit/s, speech codec, a source-controlled rate scheme including a Voice Activity Detection (VAD), a comfort noise generation system and an error concealment mechanism to compensate the effects of transmission errors.

Fig. 2 shows the scheme of the AMR encoder. It uses a LTP (long term prediction) filter. It is transformed to an equivalent structure called adaptive codebook. This codebook saves former LPC filtered excitation signals. Instead of subtracting a long-term prediction as the LTP filter does, an adaptive codebook search is done to get an excitation vector from further LPC filtered speech samples. The amplitude of this excitation is adjusted by a gain factor $g_a$.

The encoding of the speech is described now with reference to the numbers given in Fig. 2

1. The speech signal is processed block-wise and thus partitioned into frames and sub-frames. Each frame is 20 ms long (160 samples at 8 kHz sampling frequency) and is divided into 4 sub-frames of equal length.

2. LPC analysis of a Hamming-windowed frame.

3. Because of stability reasons, the LPC filter coefficients are transformed to Line Spectrum Frequencies (LSF). Afterwards these coefficients are quantized in order to save bit rate. This step and the previous are done once per frame (except in 12.2 kbit/s mode; the LPC coefficients are calculated and quantised twice per frame) whereas the steps 4 - 9 are performed on sub-frame basis.

4. The sub-frames are filtered by a LPC filter with re-transformed and quantised LSF coefficients. Additionally the filter is modified to improve the subjective listening quality.

5. As the encoding is processed block by block, the decaying part of the filter, which is longer than the block length, has to be considered by processing the next sub-frame. In order to speed up the minimization of the residual power described in the following, the zero impulse response of the synthesis filter excited by previous sub-frames is subtracted.

6. The power of the LPC filtered error signal e(n) depends on four variables: the excitation of the adaptive codebook, the excitation of the fixed codebook and the respective gain factors $g_a$ and $g_f$. In order to find the global minimum of the power of the residual signal and as no closed solution of this problem exists, all possible combinations of these four parameters have to be tested experimentally. As the minimization is hence too complex, the problem is divided into subproblems. This results in a suboptimal solution, of course. First the adaptive codebook is searched to get the optimal lag L and gain factor $g_{a,L}$. Afterwards the optimal excitation scaled with the optimal gain factor is synthesis-filtered and subtracted from the target signal. This adaptive codebook search accords to a LTP filtering as shown.

7. In a second step of the minimization problem the fixed codebook is searched. The search is equivalent to the previous adaptive codebook search. I.e. it is looked for the codebook vector that minimizes the error criteria. Afterwards the optimal fixed gain is determined. The resulting coding parameters are the index of the fixed codebook vector J and the optimal gain factor $g_{f,J}$.

8. The scaling factors of the codebooks are quantized jointly (except in 12.2 kbit/s mode - both gains are quantized scalar), resulting in a quantization index, which is also transmitted to the decoder.

9. Completing the processing of the sub-frame, the optimal excitation signal is computed and saved in the adaptive codebook. The synthesis filter states are also saved so that this decaying part can be subtracted in the next sub-frame.

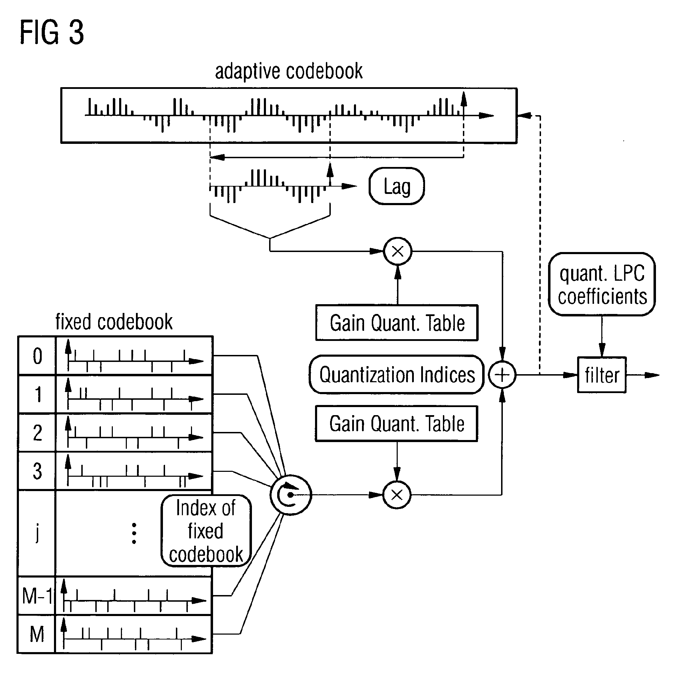

**Function of a decoder (Fig. 3)**

Now the decoder is described in reference with Fig. 3

As shown in the previous section, the encoder transforms the speech signal to parameters which describe the speech. We will refer to these parameters, namely the LSF (or LPC) coefficients, the lag of the adaptive codebook, the index of the fixed codebook and the codebook gains, as "speech coding parameters". The domain will be called "(speech) codec parameter domain" and the signals of this domain are subscripted with frame index $k$.

Fig. 3 shows the signal flow of the decoder. The decoder receives the speech coding parameters and computes the excitation signal of the synthesis filter. This excitation signal is the sum of the excitations of the fixed and adaptive codebook scaled with their respective gain factors. After the synthesis-filtering is performed, the speech signal is post-processed.

**Speech Modes in the Parameter domain**

Now the implementation of the gain loss control is described in detail.

The two different conversation modes, single-talk and double-talk, can be transferred to the codec parameter domain.

For single-talk thus eq. (2) can be written as

$$g_y(k)_{e(t)=0} = g_s(k) \qquad\qquad (5)$$

and eq. (3) as

$$g_y(k)_{s(t)=0} = g_{\_e}(k) \qquad\qquad (6)$$

$g_y(k)$, is the gain factor of the fixed codebook, also called fixed gain. The sub-indices refer to the bit-stream or the respective speech signal, the fixed gain is computed from. S denotes speech and e denotes echo.

If the far-end speaker A is not talking, the gain of the fixed codebook of the microphone signal $y(n)$ is equal to the gain of the near-end speech. Furthermore the gain of the microphone signal is equal to the gain of the echo signal, if speaker B is not talking.

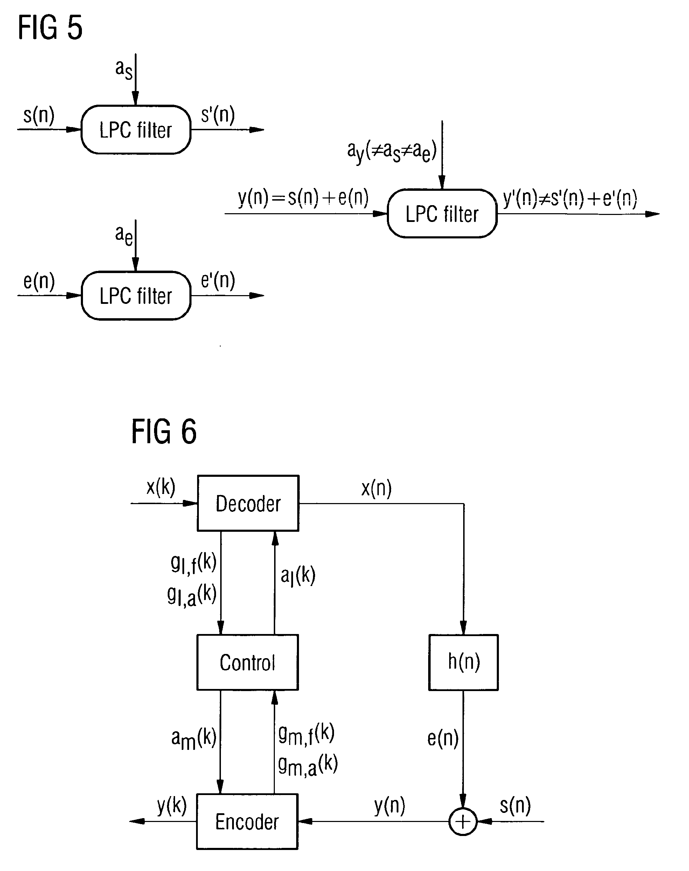

In double-talk mode the microphone signal is the sum of the speech and of the echo. After LPC filtering the resulting signal is no longer the sum of the filtered speech and echo. This is depicted in Fig. 5

In Fig. 5, first the speech $s(n)$ is analyzed in order to get a set of LPC coefficients a. The LPC filtered speech is denoted as $s'(n)$. The same is done with the echo $e(n)$ resulting in $e'(n)$ with coefficients $a_e$. As long as the echo is not a scalar weighted copy of the speech signal $e(n) \neq \alpha^* s(n)$, what is normally true, the auto-correlation functions are not directly proportional and therefore two different sets of filter coefficients are obtained during the LPC analysis.

If the microphone signal $y(n)$ is analysed and filtered, the signal $y'(n)$ is obtained. Because $e(n) \neq \alpha^* s(n)$, the microphone signal is not proportional to the speech or echo $y(n)=s(n)+e(n) \neq \Box^* s(n) \neq \Box\Box e(n)$ and thus the respective LPC coefficients $a_y$ are different to these of the speech and the echo signal. As all three signals are filtered with miscellaneous LPC filters, the modified microphone signal is no longer the sum of the filtered speech and echo $y'(n) \neq s'(n)+e'(n)$.

Since the LTP filter is based on a similar analysis equation as the LPC filter it can be shown further, that after LTP filtering (or the adaptive codebook search) the modified microphone signal is not additive linked with the modified speech and echo signal. Therefore different codebook vectors and different gains are obtained by the fixed codebook search.

Because of the non-linearity of the speech codec shown above, the gain of the microphone signal can not be written as the sum of the gains of speech and echo signal in double-talk mode. Thus equation (1) transforms in

$$g\_y(k)=f(g\_s(k),g\_e(k)) \qquad\qquad (7);$$

The function can be restricted, if the following is assumed: If neither the far-end speaker A nor the near-end speaker B are talking, there is no microphone input signal ($s(t)=0, e(t)=0 -> y(t)=0). By encoding a null-file, the gain of the fixed codebook is set equal to zero (x(t)=0 -> g_x(k)=0). After LPC and LTP analysis and processing, the residual speech signal is still null. As the vectors of the fixed codebook are non-zero, the corresponding gain has to be set to zero, so that this excitation synthesises a null-file. Therefore eq. (A) is restrained to

$$g\_y(k) = f( \ g\_s(k)=0 \ , \ g\_e(k)=0 \ ) = 0 \qquad\qquad (8)$$

This means that the "gain-function" has no absolute term.

**Replacement of codec parameters**

Noise has an influence on the above described codec parameters.

Therefore the AMR decoder was slightly modified such that it could read two bit-streams coming from encoded files with different background noise levels. Then, according to the desired experiment, the decoder can use some of the parameters encoded with high noise level or some parameters encoded with low noise level. This permits to evaluate the influence of the codec parameters on the noise level as well as on the quality of the decoded speech.

The results of a Comparison Category Rating (CCR) listening test done in this experiment showed that the level of background noise is more or less represented by the gain of the fixed codebook. Thus modifications of this gain leads to noise reduction. As in the time and/or frequency domain similar methods are applied on noise as well as on echo cancellation, the conclusion of this experiment is transferred to the echo cancellation problem in the parameter domain. Therefore the fixed codebook gain is modified in order to reduce the acoustic echo.

**Gain Loss Control on Speech Codec Parameters (Fig.6)**

With reference to Fig. 6 an echo cancellation method that can be implemented directly in the AMR codec or any speech codec based on CELP coding. The method is based on the idea to modify the fixed codebook gain in the encoder as well as in the decoder. The changing of these parameters is done on sub-frame basis using attenuation factors, which are determined according to the energy of the signal in the loudspeaker and microphone path respectively. This energy estimation is performed on basis of speech codec parameters.

Fig. 6 shows the principle of the gain loss control. Furthermore the loudspeaker-room-microphone system is depicted. The encoded speech bit stream $x(k)$ is transmitted and decoded to the speech $x(n)$. The speech signal $x(n)$ is reflected in the surrounding room, for example in a car or in an office, and recorded by the microphone device. The reflection is described by convoluting the speech $x(n)$ by the impulse response $h(n)$ resulting in the echo $e(n)$. Beneath the echo, the microphone signal also consists of the usual speech $s(n)$. Thus the microphone signal $y(n)$ is the sum of $s(n)$ and $e(n)$. This signal is encoded resulting in the bit stream $y(k)$ .

The central idea is to attenuate the fixed gain of the microphone signal by a factor of $a_m(k)$ and the fixed gain of the loudspeaker path by $a_l(k)$. In order to determine these modification factors the energy is estimated on basis of codec parameters. Therefore the fixed gains of the loudspeaker path $(g_{l,f}(k))$ and the microphone path $(g_{m,f}(k))$ and the respective adaptive gains $g_{l,a}(k)$ or $g_{m,a}(k)$ of the loudspeaker path are passed to the control unit.

**Estimation of the energy**

The estimation of the speech signal energy is done on sub-frame basis as the gains of the fixed and adaptive codebook are computed every sub-frame. Because the estimation is done on loudspeaker path parameters as well as on microphone path parameters, the indices 1 and m of the gains are now neglected. With reference to Fig. 2 different estimations are foreseen:

a) A simple idea is to consider the fixed codebook and to use the energy of the codeword $E_f$ multiplied with the corresponding gain $g_{f(k)}$

$$\hat{E}_1(k) = E_f * g_f(k)$$

In a speech synthesis model the vectors of the fixed codebook can be seen as excitations compared to a noise generator of equal power, as these normalized vectors represent the residual whitened part of the LPC and LTP filtered speech. The fixed codebook gain amplifies these vectors so that the power of the synthesized speech is increased.

b) A further step is to include the excitation of the adaptive codebook and its gain $g_a(k)$ to the energy estimation process

$$\hat{E}_2(k) = E_f * g_f(k) + \hat{E}_2(k\text{-}1)g_a(k)$$

As the adaptive codebook is updated with the summed and scaled excitation of the fixed and adaptive codebook vector of the former sub-frame, a recursive estimation is used in fact.
This approximation has been proven especially relevant in public.

c) The third estimation method makes use of the speech synthesis filter, i.e. that the estimated energy $\hat{E}_2(k)$ is multiplied by an amplification factor A(k)

$$\hat{E}_2(k) = E_f * A(k)$$

Therefore the LPC coefficients of the synthesis filter are used to determine the amplification factor A(k) with

$$H(f) = 1/A(z)|_{z= e^{j\omega}*e^{j2\pi f}}$$

where $A(z)^{-1}$ is the transfer function of the synthesis filter in the analysis through synthesis system. Finally this estimation rule considers the whole synthesis process including the excitations of both codebooks, the fixed and the adaptive gain and the speech synthesis filter.

The different estimation methods are tested with various speech signals. The energy may be computed on a sub-frame basis. Thus all energy graphs refer to the energy per sub-frame. The scaling of the energy is done on a dB scale converting the real number representation to a logarithmic scale without normalization. Hence 0 dB refers to a sum of 40 speech samples (5 ms*8 kHz) with a result of 1.
In order to get a more precise statement concerning the applicability of the different estimation methods than described by methods a -c , the auto- and cross-correlation function of the energy signals are computed. The correlation is only processed during speech periods, so that different floors of the estimation, mainly during speech pauses, are not taken into account. Therefore the VAD (voice acitivity detector) of the AMR codec is used to detect these speech pauses.

a) Energy Estimation based on codec parameters

First the energy estimation of the signal in the loudspeaker path and in the microphone path is described. As set out above, the respective energies are used for deriving attenuation factors to be applied on the fixed gains.
The energy $E_l$ of the (loudspeaker) speech signal $x(k)$ and the energy $E_m$ of the microphone signal $y(k)$ are estimated based on the respective adaptive and fixed gains

$$E_l(k) = g_{l,f}(k) + g_{l,a}(k)E_l(k\text{-}1)$$

$$E_m(k) = g_{m,f}(k) + g_{m,a}(k)E_m(k\text{-}1).$$

Where $g_{l,f}$ (resp. $g_{m,f}$) stands for the fixed gain and $g_{l,a}$ (resp $g_{m,a}$) for the adaptive gain of the signal $x(k)$ (resp. $y(k)$) of the loudspeaker path and the microphone path respectively.
As a result the decoder and the encoder is modified such, that it is possible to extract the gains. A correlation analysis of the energy per sub-frame and the estimated energy showed that this method is applicable to estimate properly the energy.

**Determination of the attenuation factors**

After having estimated the respective energies the attenuation factors are derived therefrom. In order to e.g. not overestimate short-term variations of said energies, long-term estimations of the energy of the loudspeaker path $\hat{E}_l$ and of the microphone path $\hat{E}_m$ are determined by using a non-linear filter described by

$$\hat{E}_l(k) = \begin{cases} (1-a_r)E_l(k) + a_r\hat{E}_l(k-1) & if \ \_\_E_l(k) > \hat{E}_l(k-1) \\ (1-a_f)E_l(k) + a_f\hat{E}_l(k-1) & else \end{cases}$$

$$\hat{E}_m(k) = \begin{cases} (1-a_r)E_m(k) + a_r\hat{E}_m(k-1) & if \ \_\_E_m(k) > \hat{E}_m(k-1) \\ (1-a_f)E_m(k) + a_f\hat{E}_m(k-1) & else \end{cases}$$

, where $a_r$ describes the behaviour of the speech signal at an rising edge and $a_f$ at an falling edge.

With $a_r < a_f$ an increase in the speech level is emphasised and the filter is decaying slower, if the speech signal decreases in energy. Using this strategy short speech pauses, for example during spoken words, are neglected. Especially the values $a_r=0.7$ and $a_f=0.95$ have been found useful in practice.

In another preferred embodiment the low-pass filtered energy of a speech signal is taken to determine an attenuation factor. This factor decreased the amplitude of the microphone signal depending on its energy. The estimate of the energy is thus (low-pass) filtered in order to eliminate fast changes. Therefore small speech pauses are neglected by determining the attenuation factors. For the filtering a non-linear filter is used.

The resulting long time estimations {E}_l(k) and {E}_m(k)$ are used to determine the attenuation factors for the loudspeaker and microphone path, respectively.

In the following a magnitude representative for the energy difference $E_{diff}(k)$ is determined, e.g. the energy difference $E_{diff}(k)$ is chosen as the ratio of the long-term loudspeaker and microphone energy in the log-area

$$E_{diff}(k) = 10\log\frac{\hat{E}_l(k)}{\hat{E}_m(k)}$$

Using this energy difference the attenuation factor is derived, which is for the loudspeaker gain e.g. characterised by

$$a_l(k) = \begin{cases} 0 & E_{diff}(k) < -m/2 \\ 1/mE_{diff}(k) + 0.5 & -m/2 < E_{diff}(k) < m/2 \\ 1 & m/2 < E_{diff}(k) \end{cases}$$

The corresponding attenuation factor of the microphone path is calculated then by

$$a_m(k) = 1 - a_l(k)$$

Thus, either the microphone path or the loudspeaker path are attenuated. Hence it is guaranteed that at least one of both paths is attenuated. If the microphone signal is decreased completely then the loudspeaker signal is not modified at all and vice versa.

In the preferred embodiment, where the low pass filtered energy of the microphone and loudspeaker signals are used for deriving the attenuation factors $a_l(k)$ and $a\_m(k)$, the latter are consequently functions of the low-pass filtered energy estimations.

Principally, the attenuation factors $a_l(k)$ and $a_m(k)$ should be in the interval [0 ; 1], so that the fixed gain is either attenuated completely or not at all in the extreme cases.

The acoustic echo can be decreased either before it is generated by modifying the loudspeaker signal or after the forming by attenuating the microphone signal. Therefore, as set out above, choose the attenuation factor a_m(k) can be chosen according to a_m(k) = 1 - a_l(k)

The control characteristics can be modified easily for silence mode, i.e. both speakers do not talk. If the estimated energy of the loudspeaker signal and of the microphone signal are below a certain threshold, $a_m = 0,5$ can be chosen, meaning that the loudspeaker path is as strong attenuated as the microphone path.

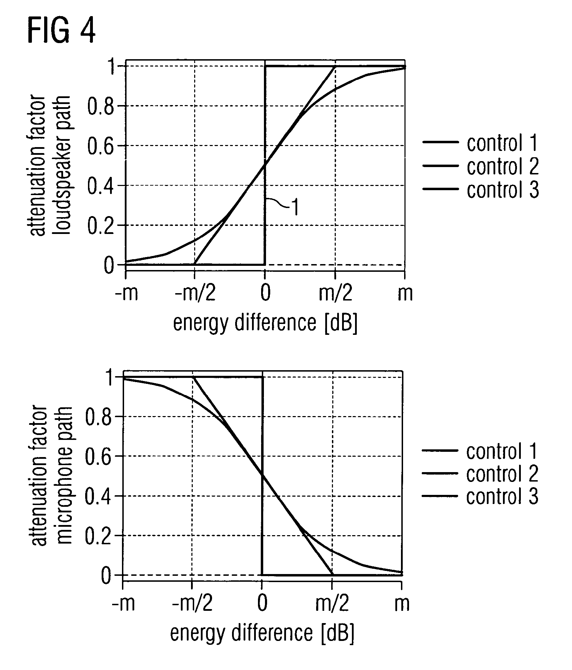

The behaviour of the attenuation factors $a_m$ and $a_l$ can be seen in Fig. 4, where these attenuation factors are depicted versus energy difference expressed in dB. m denotes a threshold of the energy difference, where - m = 10log $(E_l/E_m)$, thus the loudspeaker energy is considered as negligible. For m = 10log($E_m/E_l$) the microphone energy is negligible.

Curve 1 shows an abrupt changing of the attenuation factors from 0 to 1 and 1 to 0 if the energy of the loudspeaker path and microphone path are equal.

Curve 2 shows a linear behaviour, where the respective modification factors are increasing/decreasing startin from m/2 or -m/2.

In curve 3 the linear behaviour of curve 2 is smoothed.

The curves do not need to be symmetric, also asymetric behaviour can be applied, e.g. for applications where the loudspeaker signal or the microphone signal are emphasised.

**Claims**

1. Method for transmitting speech parameters representing an acoustic signal being encoded by an analysis through synthesis method wherein at least a part of the speech parameters are selected from fixed codebook entries and respective fixed gains for describing the acoustic signal in a time interval, comprising the steps:

   a) Estimating the energy ($E_l(k)$) of a received signal (x(n)) by using the fixed gain ($g_{l,f}(k)$) of the received signal (x(n));
   b) Estimating the energy of a signal to be sent (y(n)) by using the fixed gain ($g_{m,f}(k)$) of the signal to be sent;
   c) Deriving a loudspeaker modification factor ($a_l(k)$) for modifying the fixed gain factor ($g_{l,f}(k)$) of the received signal, said loudspeaker modification factor being based on the energy of the received signal (x(n)) and the energy of the signal to be sent (y(n));
   d) Modifying the fixed gain ($g_{l,f}(k)$) of the received signal with the loudspeaker modification factor.

2. Method according to claim 1, wherein in step c) further a microphone modification factor ($a_m(k)$) for modifying the signal to be sent (y(n) is derived, said microphone modification factor being based on the energy of the signal to be sent (y(n)) and the received signal (x(n)) and wherein the fixed gain ($g_{m,f}(k)$) of the signal to be sent is modified with the microphone modification factor;

3. Method according to claim 1 or 2, wherein further an adaptive codebook and a respective adaptive gain are used to describe the acoustic signal and the estimation of the energy of the signal to be sent (y(n)) and the received signal (x(n)) is performed by including the adaptive codebook and the adaptive gain factor.

4. Method according to any of the previous claims, wherein the energy estimate of the signal to be sent and the received signal is averaged and the averaged energies are used for deriving the loudspeaker modification facto and the microphone modification factor.

5. Method according to any of the previous claims, wherein the estimating of the energy of the received signal is performed using the expression

$$E_l(k) = E_{f,c}g_{l,f}(k)+g_{l,a}(k)E_l(k-1)$$

where $E_l(k)$ is the energy of the received signal in the time interval k, wherein k is an integer number, $E_{f,c}$ is a entry of the fixed codebook, $g_{l,f}$ is the fixed gain of the received signal and $E_l(k-1)$ is the energy of the received signal in the previous time interval, and the energy of the signal to be sent is estimated by using the expression:

$$E_m(k) = E_{f,c}g_{m,f}(k) + g_{m,a}(k)E_m(k\text{-}1)$$

where $E_m(k)$ is the energy of the signal to be sent in the time interval k, wherein k is an integer number, $E_{f,c}$ is a entry of the fixed codebook, $g_{l,f}$ is the fixed gain of the received signal and $E_m(k\text{-}1)$ is the energy of the signal to be sent in the previous time interval.

6. Method according to any of the previous claims, wherein the signal to be sent is recorded by a microphone and the received signal is reproduced by a loudspeaker.

7. Method according to any of the previous claims, wherein the time interval is a frame or a subframe.

8. Method according to any of the previous claims 4 to 7, wherein the averaging is performed using the following equation:

$$\hat{E}_l(k) = \begin{cases} (1-a_r)E_l(k)+a_r\hat{E}_l(k-1) \ \ if \ E_l(k) > \hat{E}_l(k-1) \\ (1-a_f)E_l(k)+a_f\hat{E}_l(k-1) \qquad\qquad else \end{cases}$$

wherein $\hat{E}_l(k)$ is the estimated energy of the received signal, $a_r$ is a weighting factor applied to the estimate, if the energy $\hat{E}_l(k)$ is rising and $E_l$ is the energy determined for a time interval according to claim 5, and further using the equation:

$$\hat{E}_m(k) = \begin{cases} (1-a_r)E_m(k)+a_r\hat{E}_m(k-1) \ \ if \ E_m(k) > \hat{E}_m(k-1) \\ (1-a_f)E_m(k)+a_f\hat{E}_m(k-1) \qquad\qquad else \end{cases}$$

wherein $\hat{E}_m(k)$ is the estimated energy of the received signal, $a_f$ is a weighting factor applied to the estimate, if the energy $\hat{E}_m(k)$ is rising and $E_m$ is the energy determined for a time interval according to claim 5.

9. Method according to any of the previous frames wherein the modification factor $a_l$ for the received signal is determined by

$$a_l(k) = \begin{cases} 0 \qquad\qquad E_{diff}(k) < -m/2 \\ 1/mE_{diff}(k)+0.5 \ -m/2 < E_{diff}(k) < m/2 \\ 1 \qquad\qquad m/2 < E_{diff}(k) \end{cases}$$

wherein m is an integer number denoting an energy threshold, $E_{diff}$ is the difference in energy between the received signal and the signal to be sent and k is an integer number denoting the time interval.

10. Method wherein the difference in energy is determined by the ratio $E_{diff}(k)=10\log\dfrac{\hat{E}_l(k)}{\hat{E}_m(k)}$ of the energies estimated according to claim 8.

11. Method wherein the microphone modification $a_m$ factor is determined by

$$a_m(k)=1-a_l(k),$$

wherein $a_l$ is the loudspeaker modification factor

**12.** Speech coding apparatus with a processing unit set up for performing a method according to any of the claims 1 to 11.

**13.** Communications device, particularly a mobile phone, with a speech coding apparatus according to claim 12.

**14.** Communications network with a speech coding apparatus according to claim 12.

## FIG 1

$x(k)$ →[ Decoder ]→ $x(n)$

loudspeaker path

→[ D / A ]→ $x(k)$ → ⊏ L

$e(t) = x(t) * h(t)$

far-end Speaker A

near-end speaker B

M   echo $e(t)$

$y(k)$ ←[ Encoder ]← $y(n)$

microphone path

←[ D / A ]← $y(t)$ ← ○ — speech $s(t)$

— noise $n(t)$

$y(t) = s(t) + e(t) + n(t)$

FIG 2

# FIG 3

adaptive codebook

Lag

fixed codebook

| 0 | |
| 1 | |
| 2 | |
| 3 | |
| j | ⋮ |
| M−1 | |
| M | |

Index of fixed codebook

× 

Gain Quant. Table

Quantization Indices

Gain Quant. Table

×

＋

quant. LPC coefficients

filter

# FIG 4

# FIG 5

# FIG 6

**European Patent Office**

## EUROPEAN SEARCH REPORT

Application Number

EP 03 02 2252

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 4 609 788 A (MILLER ET AL) 2 September 1986 (1986-09-02) * abstract * * column 2, line 26 - line 49 * * column 10, line 27 - line 32 * * column 11, line 35 - line 43 * * claims 1,2 * --- | 1-4,6,7, 10,12-14 | G10L19/04 G10L21/02 H04B3/20 H04M9/08 |
| X Y | FR 2 748 184 A (FRANCE TELECOM) 31 October 1997 (1997-10-31) * abstract * * page 1, line 29 - page 2, line 12 * * page 3, line 6 - line 17 * * page 6, line 28 - line 30 * * page 7, line 25 - line 31 * * figure 1 * --- | 11 1-4,6,7, 10,12-14 | |
| Y | EP 1 301 018 A (CIT ALCATEL) 9 April 2003 (2003-04-09) * abstract * * page 4, paragraphs 39,43 * * page 5, paragraphs 44,45,50,51 * * page 6, paragraphs 65,66 * * figure 3 * --- | 1-4,6,7, 10,12-14 | TECHNICAL FIELDS SEARCHED (Int.Cl.7) G10L H04B H04M |
| A | US 5 668 794 A (MCCASLIN ET AL) 16 September 1997 (1997-09-16) * column 3, line 41 - line 58 * * column 4, line 8 - line 21 * * claims 1,2 * --- | 1-14 | |
| A | US 5 353 348 A (SENDYK ET AL) 4 October 1994 (1994-10-04) * abstract * * column 5, line 40 - line 60 * --- | 1,2,4, 10,12-14 | |
| | -/-- | | |

The present search report has been drawn up for all claims

| Place of search | Date of completion of the search | Examiner |
|---|---|---|
| THE HAGUE | 24 March 2004 | Santos Luque, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 03 02 2252

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | WO 02 054744 A (KIRLA OLLI ;KOISTINEN TOMMI (FI); NOKIA CORP (FI)) 11 July 2002 (2002-07-11) * abstract * --- | 1-3, 12-14 | |
| A | US 6 011 846 A (RABIPOUR ET AL) 4 January 2000 (2000-01-04) * column 4, line 7 - line 22 * ----- | 1-4, 12-14 | |

TECHNICAL FIELDS SEARCHED (Int.Cl.7)

The present search report has been drawn up for all claims

| Place of search | Date of completion of the search | Examiner |
|---|---|---|
| THE HAGUE | 24 March 2004 | Santos Luque, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.................................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 03 02 2252

This annex lists the patent family members relating to the patent documents cited in the above-mentioned European search report.
The members are as contained in the European Patent Office EDP file on
The European Patent Office is in no way liable for these particulars which are merely given for the purpose of information.

24-03-2004

| Patent document cited in search report | | Publication date | Patent family member(s) | | Publication date |
|---|---|---|---|---|---|
| US 4609788 | A | 02-09-1986 | CA | 1215487 A1 | 16-12-1986 |
| FR 2748184 | A | 31-10-1997 | FR | 2748184 A1 | 31-10-1997 |
| | | | EP | 1401183 A1 | 24-03-2004 |
| | | | EP | 0767569 A1 | 09-04-1997 |
| | | | JP | 9139696 A | 27-05-1997 |
| | | | US | 5734715 A | 31-03-1998 |
| EP 1301018 | A | 09-04-2003 | EP | 1301018 A1 | 09-04-2003 |
| | | | US | 2003065507 A1 | 03-04-2003 |
| US 5668794 | A | 16-09-1997 | US | 5631900 A | 20-05-1997 |
| | | | US | 5764753 A | 09-06-1998 |
| US 5353348 | A | 04-10-1994 | NONE | | |
| WO 02054744 | A | 11-07-2002 | WO | 02054744 A1 | 11-07-2002 |
| | | | EP | 1346553 A1 | 24-09-2003 |
| US 6011846 | A | 04-01-2000 | CA | 2262691 A1 | 30-12-1998 |
| | | | WO | 9859431 A1 | 30-12-1998 |
| | | | EP | 0920744 A1 | 09-06-1999 |
| | | | CA | 2245625 A1 | 25-06-1998 |
| | | | WO | 9827668 A1 | 25-06-1998 |
| | | | CN | 1212092 A | 24-03-1999 |
| | | | EP | 0883935 A1 | 16-12-1998 |
| | | | JP | 2000503837 T | 28-03-2000 |
| | | | JP | 3310302 B2 | 05-08-2002 |
| | | | US | 5943645 A | 24-08-1999 |

EPO FORM P0459

For more details about this annex : see Official Journal of the European Patent Office, No. 12/82